(19) Europäisches Patentamt / European Patent Office / Office européen des brevets

(11) **EP 2 516 023 B1**

(12) **EUROPEAN PATENT SPECIFICATION**

(45) Date of publication and mention of the grant of the patent:
**30.04.2014 Bulletin 2014/18**

(21) Application number: **09805845.6**

(22) Date of filing: **12.10.2009**

(51) Int Cl.:
*A63B 21/005* (2006.01)　　*H02K 41/03* (2006.01)

(86) International application number:
**PCT/IB2009/054469**

(87) International publication number:
**WO 2010/044048 (22.04.2010 Gazette 2010/16)**

(54) **ELECTROMAGNETIC LOAD DEVICE FOR AN APPARATUS FOR PHYSICAL EXERCISE, AND APPARATUS PROVIDED WITH SAID DEVICE**

ELEKTROMAGNETISCHE LADEVORRICHTUNG FÜR EIN TRAININGSGERÄT UND MIT DIESER VORRICHTUNG VERSEHENES GERÄT

DISPOSITIF DE CHARGE ÉLECTROMAGNÉTIQUE POUR APPAREIL D'EXERCICE PHYSIQUE, ET APPAREIL MUNI DUDIT DISPOSITIF

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.10.2008 IT MI20081810**

(43) Date of publication of application:
**31.10.2012 Bulletin 2012/44**

(73) Proprietor: **Massa, Enrico**
**09045 Quartu Sant'elena (IT)**

(72) Inventor: **Massa, Enrico**
**09045 Quartu Sant'elena (IT)**

(56) References cited:
**DE-A1- 3 920 727　　US-B1- 6 265 793**

## Description

Field of the invention

The present invention refers to an electromagnetic load device for an apparatus for physical exercise, and to an apparatus provided with said device.

State of the art

In the last years there has been a renewed interest towards a regular and systematic physical exercise with the aim to promote the health of a person, to increase physical qualities like strength and resistance and to reach a determined physical shape.

Many people, professionals and not, spend lots of time using these apparatus, in particular professional athletes that compete to reach the best possible results. ' As it is known, in the field of fitness machines, several configurations of apparatus exist, each one able to train the desired muscles of the athlete following suitable schemes.

Many of these machines utilize ballasts or weights to reach a sufficient load for the programmed muscles training.

Said weights are typically formed by disks or parallelepipeds of high specific weight (cast-iron blocks, sand containers and so on) that are mounted, possibly guided, at the extremity of an arrangement of levers and pulleys of the machine for the physical exercise.

This load technique for machines for physical exercise presents a series of inconvenients unsolved to date.

First of all the significant weight of the whole machine (when loaded with the ballasts), that constitutes an inconvenient in the home use, where it is often necessary to move the machine. Besides there is a problem of comfort and security, given by the manipulation of the modular ballasts and their load/unload on the machine.

Again, it is impossible to vary the load during the exercise, that means it is impractical to follow the execution of advanced training programs, like those in which the load changes during the exercise or adaptive, like for example a program in which the athlete generates with his muscular strain a fixed power.

The weights - by their same nature - are bounded to work substantially with vertical movements and so they involve constrains in the design of the machines, besides producing considerable burden.

Several methods have been proposed to solve at least partially said inconvenients and they are divided in the following categories: electromagnetic brakes, hydraulic systems, electric motors used as brakes and electromechanical systems coupled with weights.

For example in the patents US-6117049 and US-5785632 are disclosed electromechanical methods that are able to control electronically the load that the athlete senses during the exercise by acting on locks on the ballasts. These methods even if they present the advantage of being able to control electronically the load do not resolve the problem of the high weight and encumbrance of the machine.

In the patent US-5435798 is disclosed a method that utilizes an electric motor to control electronically the load. This method, together with others, that utilize standard electric motor, requires however to be coupled with complex apparatus like gears, reducers and transmission clutches in order to transform the rotational movement in linear movement and this causes problems of reliability, encumbrance, cost and difficulty in manufacturing.

In the patent US-4063726 is disclosed an hydraulic method, of the type utilized even in several commercial systems, together with similar others. Such systems however have the defect of being heavy, cumbersome and complex, also they require a constant maintenance, and are subject to problems like the loss of the working fluid.

Finally electromagnetic brakes, proposed in numerous known solutions, present disadvantages analogous to the systems that utilize electric motor because their motion is generally rotational. Moreover their further disadvantage is that they can produce only a force opposite to the movement, that is that they allow only "concentric contraction" of a muscle, and therefore are unsuitable to substitute completely the present weights.

It exists also a German patent DE-3920727 in which is disclosed a load device that utilizes an induction linear motor, that is not provided with permanent magnets, powered by a three-phase alternating current. In general this type of devices does not serve well the purpose, besides it has a low efficiency, a considerable weight and volume and it is not able, like the device of the present invention, to generate electricity.

The patent DE-10351862, grounds on the patent DE-3920727, indicates as defects of it the fact that, in a linear construction, forces in the orthogonal direction of motion arise. These forces can vary the geometry of the construction and can make unstable the apparatus, therefore it is needed to design the apparatus in a solid way, so increasing the weight. The solution that they limit themselves to suggest instead is to use a motor with cylindrical symmetry, that therefore is not affected by unbalanced net forces in radial direction, so that a less solid construction is possible.

The patent EP-1166826, grounds on the German patent DE-3920727, suggests only to utilize the linear motor of DE-3920727 also to help the athlete to carry out an exercise.

In the patent DE-19517090 is described a device that utilize the force that is generated between two cylindrical solenoids or between a solenoid and a permanent magnet. However it is known that said device, because of its geometry, necessitates an high expenditure of energy for its powering in the case that the requested load is comparable to the one that is normally used by an athlete.

Several patents describe different types of linear electric motors used for different applications, in particular in the patent US-6265793 is disclosed a linear electric motor comprised by a plurality of magnets fixed to flat ferromagnetic cores with adjacent magnet of opposite polarities facing each other with opposite poles separated by a space and with a plurality of coils positioned in the said separation space, with said ferromagnetic cores being able to translate along the coils. It is also disclosed a type and fabrication method of two coils having a flat and elongated toroidal shape presenting two raised short sides, and being assembled placing the two types of coils alternately side by side, so that the long sides of the coils of the first type slot into the central slots of the coils of the second type. It is also disclosed an arrangement of said coils in two groups with the movable part connected to the ferromagnetic cores sliding in between. It is also disclosed an arrangement of said group of coils composed by two superimposed group of flat and raised coils. This patent, while disclosing the most relevant prior art regarding linear electric motors, in particular does not disclose a method of arranging the flat and raised coils in two superimposed group, moved by a certain distance along the length of the motor in the plane of the coils, in order to improve the linearity of the force generated by the motor across its length. In fact a linear electric motor according to said patent is not able to exert a strong force when the side of two adjacent magnets is placed near the centre of a side of a coil where the current flow in a definite direction, because the forces between the current flowing in that side of the coil and the two adjacent magnets of opposite poles are in opposite direction, along the length of the motor. Therefore, in this configuration, to exert the same force as in other more favorable positions of the magnets, a higher current to the other coils, producing a large waste of energy due to ohmic losses and causing thermal issues, must be provided. This situation is particularly unfavorable when the motor is operated a low to zero speed since the inertia of the ferromagnetic assembly is unable to smooth the different forces exerted by the coils across the length of the motor. Such is the case that would occur if similar devices where utilized as loading device for a physical apparatus, making them unsuitable for such use, since the moving speed for this particular application is generally low.

In general the patents of the prior art present notable problems such to reduce strongly the range of application in current machines or, like in the case of the patents regarding linear motors, they limit themselves to suggest their use as a load device, without any modification to the prior art, even in a very different field of application and with a very different use. For applications in the fitness field ,in fact, the simplicity of construction (that means an high symmetry), the compactness, the cheapness, the robustness, and the capacity to develop high and constant loads also in static conditions (that means not in movement), are essential requirements. Obviously the known linear motor are not designed to satisfy all these requirements at the same time.

Therefore it can be affirmed that the methods previously proposed fail to provide a solution to all the inconvenients presented.

Summary of the invention

The aim of the present invention is to provide an electromagnetic load device for a physical apparatus, and a physical apparatus equipped with said device, that resolves completely all the previously explained inconvenients, therefore able to improve noticeably the quality of the training and able to resolve problems like the weight and encumbrance of the current machines, obtaining also an higher safety. The apparatus of the present invention improves the quality of the physical training, by applying a resistive force and not, that it is instantly controllable by the user and by the machine with commands, programs, forces and movements. In the case of home use, the apparatus has a low weight and encumbrance, so it permits to being moved in a simple way. This further advantage means a lower use of materials and lower costs of transportation.

In particular the apparatus object of the present invention is capable to create, control and transmit a force, resistive and not, in a precise and controllable way, enabling the user to utilize our modern knowledge of muscular physiology as well as to decide at a much more detailed level his training program.

Moreover the apparatus presents a weight noticeably lower than the maximum force that is able to generate and a modest electrical consumption, also lower or even negative (that means it can be a net producer of electric energy) when utilized in the way explained in the detailed description.

The mechanism of the present invention gives an alternative to the force produced by machines that utilize gravity, that are the machines currently more diffuse.

One of the principal objective of the present invention is to provide an apparatus that, coupled with training programs studied on purpose that utilize the capacity to change the load in a practically instant manner, is able to improve noticeably the results obtained by the training.

In specific is an objective of the present invention a mechanism and a methodology that achieve an better generation and a better control of the force applied to a machine for physical exercise.

The object of the present invention is an electric linear motor especially developed for a load device for physical exercise utilized for muscles training, including: a couple of permanent magnets, each couple fixed with a plurality of ferromagnetic cores as better described in the following, said couple of permanent magnets place in such a way that adjacent magnets have opposite polarity and opposite magnet are separated by a space and face each other with opposite poles; a plurality of coils of two types as better described in the following place in said space of separation between the permanent magnets and powered by an electric current, said coils being fixed with each other and to a structural support; said permanent magnets and said ferromagnetic cores being included in a mobile part that moves respect to said coils, said mobile part being able to be coupled to a means of connection of said apparatus for the physical exercise.

Moreover is object of the present invention an electromagnetic load device for said apparatus for physical exercise, and an apparatus equipped with said device, as better described in the claims, that forms an integrant part of the present invention.

Short description of the figures

Further scopes and advantages of the present invention will be clear in the detailed description that follows of an example of realization of the same and of their variants and from the included drawings, given in a pure explicative and non limitative way, wherein:

FIG. 1 is a schematic drawing in section that shows the components of an electric linear motor with permanent magnets.

FIG. 2 is a schematic planar view of the coils **3** of a linear motor as in **FIG. 1.** The coils **3** and a structural support **4** are shown.

FIG. 3 is a planar view from a side that shows a preferred embodiment of a linear motor under the present invention.

FIG. 4 is a planar view from the top of the preferred embodiment of **FIG. 3.**

FIG. 5 is a view of the section <u>A-A</u> of the preferred embodiment of **FIG. 3.**

FIG. 6 and **FIG. 7** show respectively a view of the coil of the first kind **3'** and of the second kind **3"** of the preferred embodiment of the linear motor under the present invention.

FIG. 8 is a view of the ensemble of coils **3'** and **3"** of figures **6** and **7.**

FIG. 9 is a block diagram that schematically shows the electronic control system of the apparatus.

FIG. 10 is a planar view from the top that shows a preferred embodiment of the linear motor under the present invention.

FIG. 11 is a planar view from a side of the preferred embodiment of **FIG. 10**

FIG. 12 is a view of section <u>B - B</u> of the preferred embodiment of **FIG. 11**.

FIG. 13 is a view that shows the preferred embodiment of the assembly of four coils (**3'** and **3"**).

FIG. 14 is a view of section <u>C - C</u> of the preferred embodiment of **FIG. 13**. The same numbers and the same letters of reference in the figures identify the same elements or components.

Detailed description with examples of preferred embodiment.

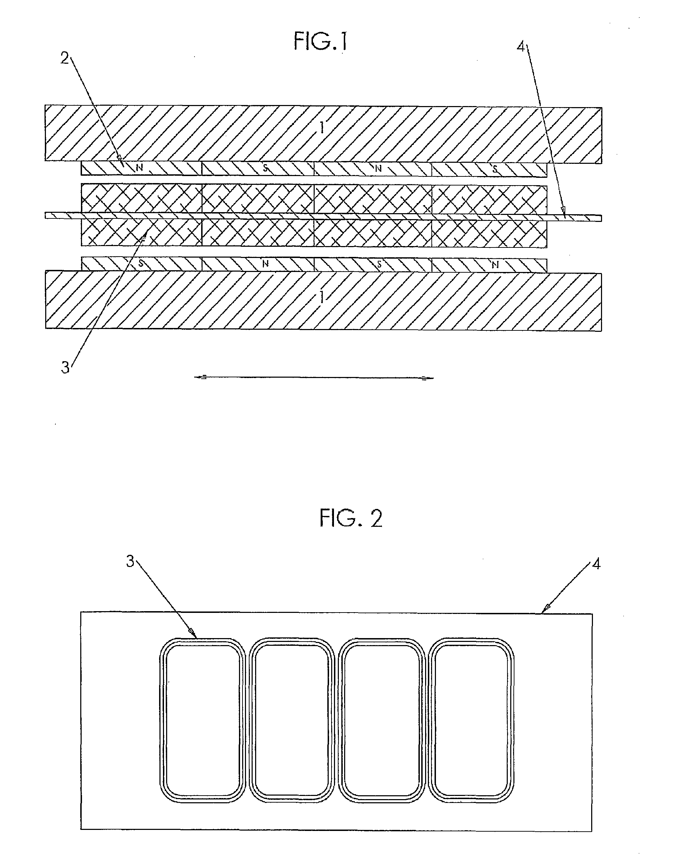

With reference to **FIG. 1**, are shown the components of a linear electric motor.

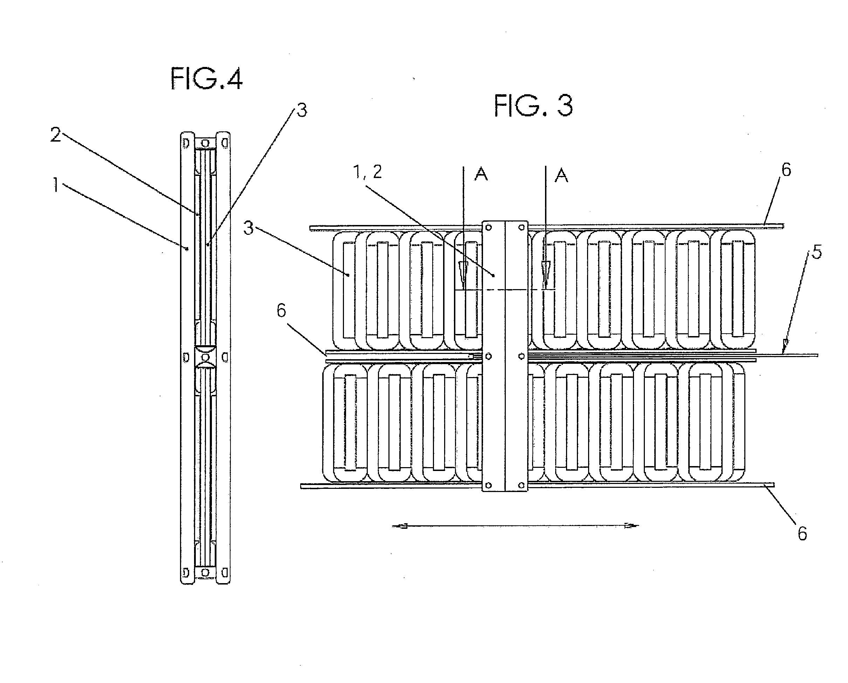

With reference to the figures, in particular **FIG. 3, 4, 5** and **FIG. 10**, **11**, **12**, is shown the preferred embodiment of the linear electric motor that generates the force, being part of the load device under the present invention. In the first embodiment the two groups of coils are placed side by side, in the second are superimposed on two parallel planes.

In the figures are highlighted the ferromagnetic cores **1**, the permanent magnets **2**, the coils **3** of conductive material powered by an electric current and a structural support **4** for the coils **3** of a material of high thermal conductivity. Moreover is presented a means to be connected mechanically **5** to the desired exercise machine of a known type.

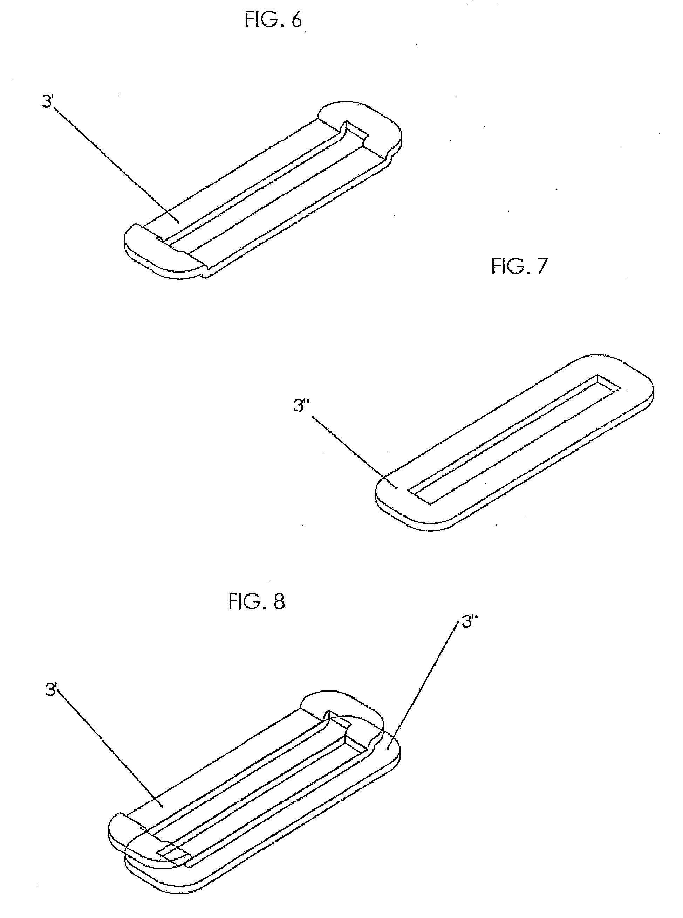

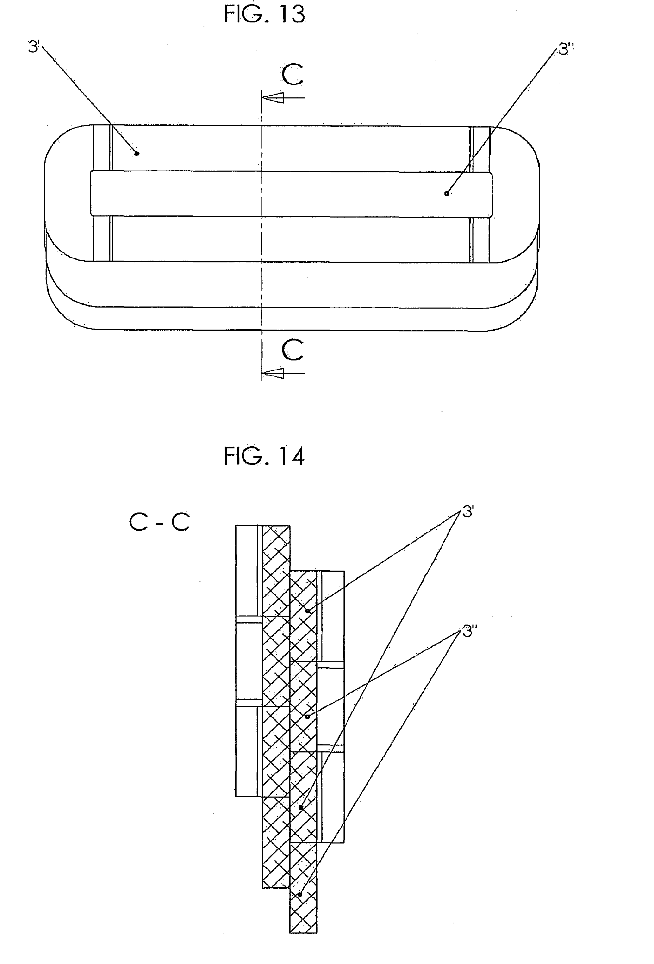

In particular in **FIG. 6**, **7**, **8**, **13**, **14** is shown in detail a preferred embodiment of the coils **3**.

The system that produces the load sustained by the athlete, also called linear electric motor, is composed of a plurality of magnets **2**, such that adjacent magnets have opposite polarity and opposite magnets are separated by a space and face each other with opposite poles, fixed, for example with epoxy, to a plurality of ferromagnetic cores **1** and in said space of separation between the magnets are placed the coils **3** powered by an electric current, which in turn are fixed to each other or to a structural support **4** made from a material with an high thermal conductivity.

The ferromagnetic cores **1** can be made with one of the known ferromagnetic materials like for example pure iron, mild steel, carbon steel, silicon steel, magnetic stainless steel, mild ferrite, nickel and iron alloys such as permalloy, nickel, iron and cobalt alloys such as Kovar®. Among them are preferred in particular carbon steel and silicon steel alloys for their high saturation and low cost.

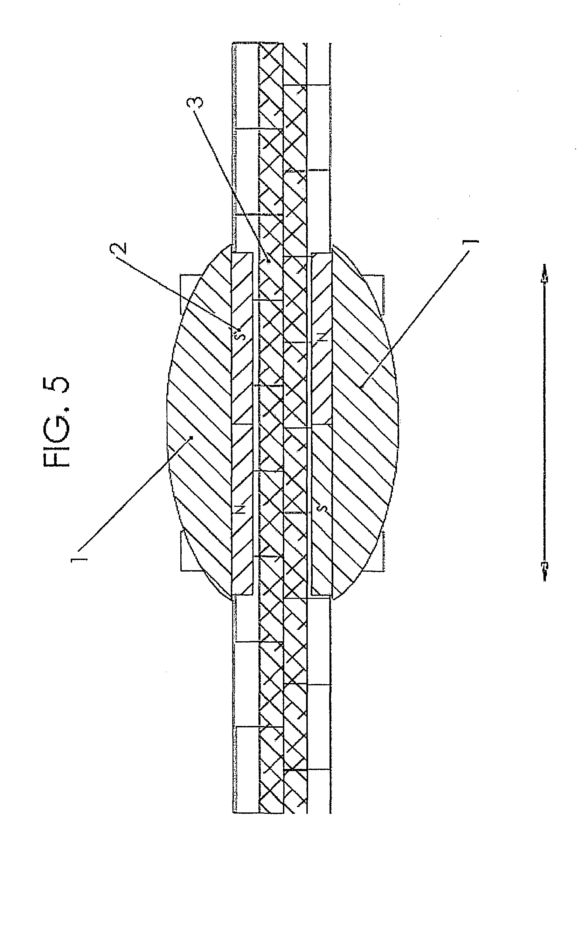

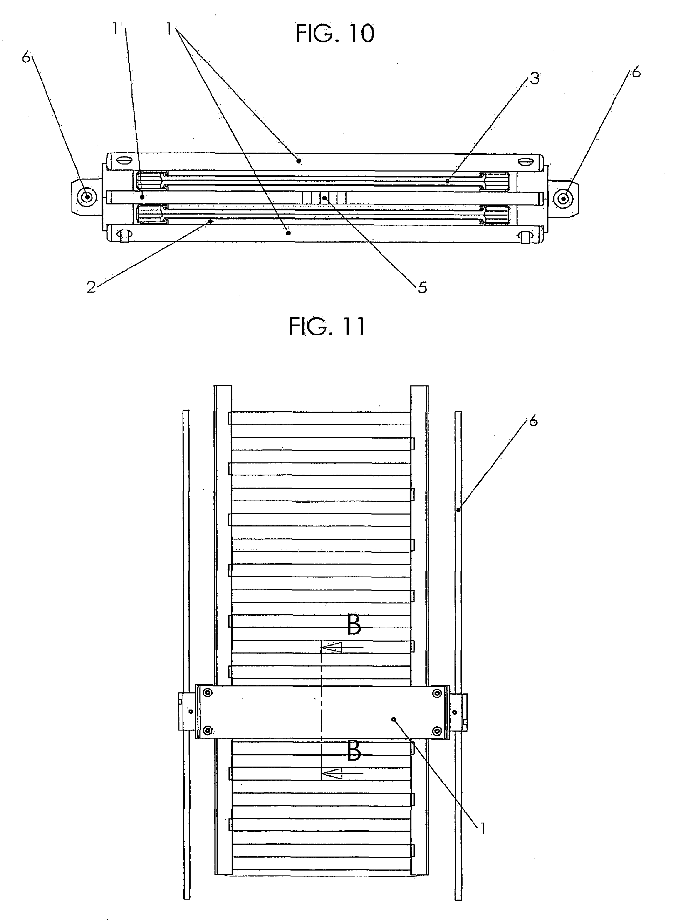

On the preferred embodiment in **FIG. 5** the ferromagnetic cores **1** have a shape similar to that of a half an ellipse and have an high enough thickness in order to contain most of the magnetic flux thereto. On the flat part is fixed, for example with epoxy resins, a couple of permanent magnets **2** with opposite polarities, with lower length compared to the cores, in order to leave a space to position the coils **3'** and **3"**. In the case of the preferred embodiment of **FIG. 10** is presented, besides the ferromagnetic cores **1,** also a flat nucleus **1'**, to which the magnets are fixed in the same way as with the cores **1**, placed in the movable central part of the apparatus and fixed to it, and it provided with the means for connection **5** to the apparatus of known type.

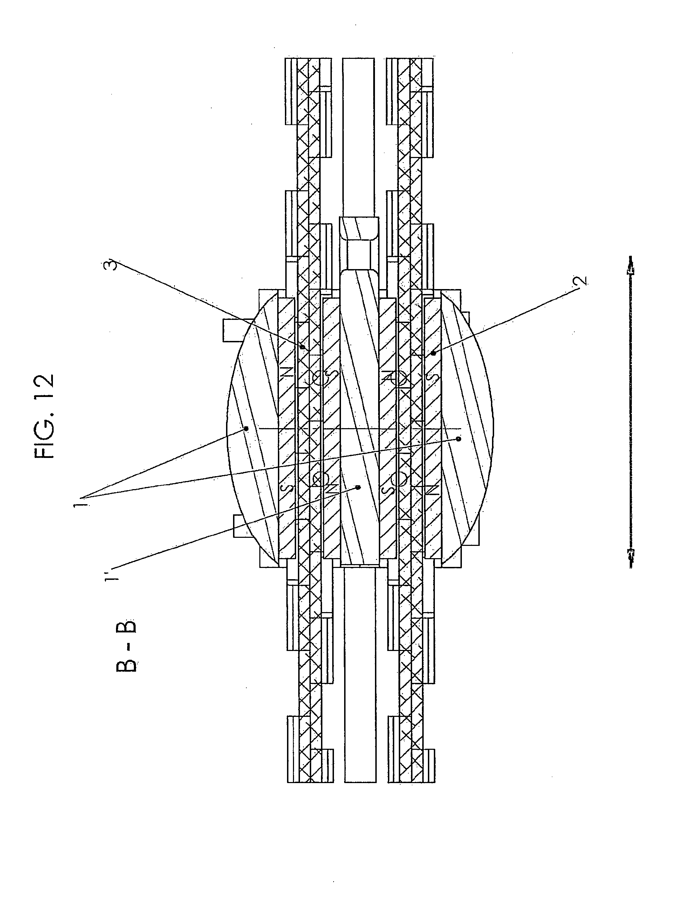

The permanent magnets **2** can be made from one of the known materials used to fabricate permanent magnets like rare earth, ferrite, and Alnico®. Among them are preferred in particular rare earth magnets like the Nd-Fe-B coated, to prevent the oxidation, for example with Ni. As it is shown in **FIG. 5** and **FIG. 12** the permanent magnets of the preferred embodiment are wide about two times the side width of the coils.

The coils **3** can be made with one of the known materials that are good electrical and thermal conductors like for example aluminum and copper. Among them is preferred in particular the aluminum because it combines good electrical and thermal characteristics with a low specific weight.

In particular in **FIG. 8, 13** and **14** it is shown a preferred method to assembly the two different kinds of coils **3'** and **3"** shown in **FIG. 6** and **FIG. 7.**

The two different kinds of coils present themselves a flat and elongated shape; the first type **3'** presents its two short sides raised. The assembly is carried out by putting side by side in an alternated way the two types of coils: the long side of the coils **3'** fits in the central aperture of the coils **3"**, so they result placed in the same plane, by taking advantage of the raised short side of the coils **3'**.

As it is shown in detail of the section of **FIG. 5, 10, 13** and **14,** the ensemble of the coils **3** in one of the preferred embodiment is composed by two rows of coils **3** placed as it is shown in **FIG. 8.** Each row presents two layer of coils. The layers are attached to each other shifted by a distance equal to half the width of the side of the coils. As it appears the total set-up is particularly compact and efficient.

The structural support **4** of the coils **3** can be done with one of the known materials that are both good thermal conductors and poor electrical conductors, with the aim to reduce parasitic currents, like for example certain alloys of aluminum, certain ceramics, etc.

The connection to the apparatus for muscles strengthening of the known type happens through the means for connection **5** as it is shown in **FIG. 3** and in **FIG. 10**.

When the permanent magnets **2** are found over the coils **3** on which a current flows in the direction given by the geometry of the coils, they are subject to a force in the longitudinal direction as indicated by the direction of the arrow in **FIG. 3**, **5** and in **FIG. 12**. Therefore the assembly composed by the ferromagnetic cores **1** and the magnets **2** is able to translate in the longitudinal direction over the coils **3,** for example by using guides **6**. The means for connection **5**, for example a cable, is fixed with the assembly and translates with it.

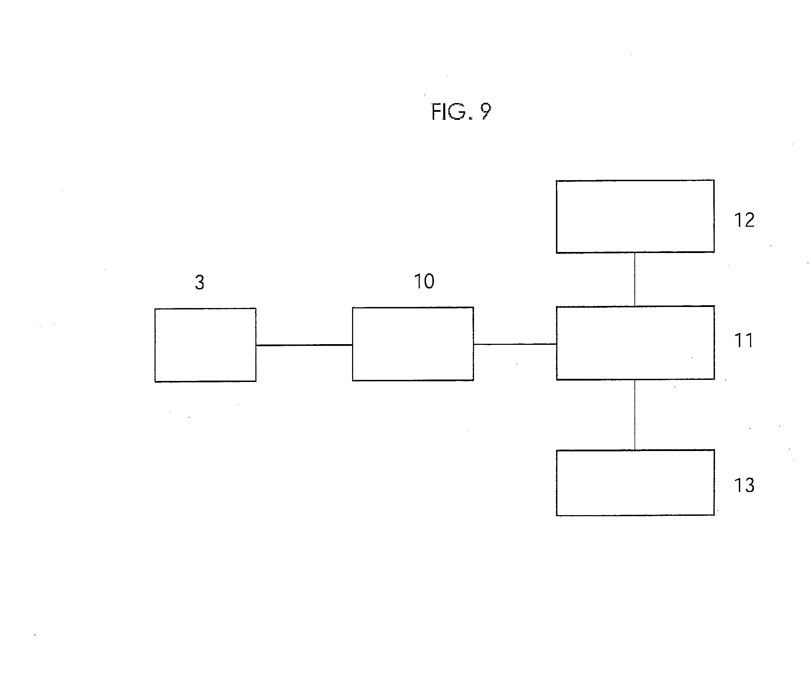

The coils **3** are powered in sequence during the movements of the permanent magnets **2** and the direction of current in the changes, under the commands of the microcontroller, in order to produce a force in the desired direction. The control of the intensity of the force takes place by modifying the current that circulate on the coils **3**. As it is shown in **FIG. 9** the power control system of the coils **3** is composed by a power supply **10**, commanded by the microcontroller **11** and provided with its own internal memory for example solid state or magnetic, and connected electrically with a series of sensors **12** that are divided in: dynamic sensors that measure position, velocity and movement; general diagnostic sensors that measure for example the temperature of the coils **3**; physiological sensors like for example heart rate sensors, body temperature, etc.

In a very short period of time the sensors **12** produce useful signals for the micro-controller **11** in order to adjust the current on the coils **3** under the preferences of the athlete, set through the control user interface **13,** connected to the microcontroller and commanded by the user (the athlete), provided with a display, commands and supports for external memories.

With the aim to minimize the power absorption of the apparatus, the microcontroller **11** powers the coils **3** that are found immediately between, entirely or in part, the permanent magnets **2**. In particular, depending on the position, the microcontroller chooses the current level for each coils **3** that are found immediately between, entirely or in part, the permanent magnets **2** in a way that the same force is produced dissipating the lowest possible amount of power.

It is evident that the group of coils are coupled relatively shifted by a length equal to half the width of one side of the coils, and that the couple of permanent magnets **2** is fixed to the semielliptical ferromagnetic cores **1** or flat **1'**.

To better comprehend the mechanism to control the power it is useful a discussion of a simple mathematical model of the situation. Let say $i_k$ is the current flowing on the k-th coil **3** and let $f_k$ be the coefficient function of the relative position of the k-th coil **3** respect to the permanent magnets **2** (in substance a coefficient proportional to the integral of the magnetic field on the volume of the coil), such that we can write the relationship:

$$F \propto \sum_k f_k\, i_k$$

where F is the generated force.

The power dissipated in the coil **3** has the expression:

$$P \propto \sum i_k^2$$

This quantity can be simply minimized and it can be obtained that the values of the currents $i_k$ have to be proportional to the coefficients $f_k$. This control method can be simply implemented via software or through dedicated hardware.

Besides the apparatus, in certain operating conditions, is able to dissipate less power of what it would be necessary to produce a certain force and also to become a net producer of energy.

In fact as it is known to an expert in the field the variation of the magnetic flux through each coil **3** produced by the movement of the permanent magnets **2** on the opposite direction to the force produced by the machine (that is when the muscles of the athlete carry out concentric movements) produce a back-electromagnetic force that in turn produce a current in the same direction of the current that already flows in the coils **3**, making possible to reduce the current intensity that it is necessary to supply to obtain a certain force and therefore to reduce the power draw in by the apparatus. From this it descends that for a range of forces and velocities (as it is known the back-electromagnetic force is proportional to the velocity) the apparatus has the ability, when concentric movements are carried out, to generate electricity.

This energy can be used to power the electronics of the apparatus, alternatively it can be stored or returned to the grid. For example it is convenient that this range corresponds to the way of exercising for normal people.

The system can be enclosed in a wrapper with the aim to isolate the movable parts of the apparatus and to provide a shield to the low frequency electromagnetic field produced by the machine. The shield can be composed for example by one or more layers of materials with high susceptibility of the known type commonly used for shielding purpose as for example pure iron, mild steel, carbon steel, silicon steel, magnetic stainless steel, mild ferrite, nickel and iron alloys such as permalloy, nickel, iron and cobalt alloys such as Kovar®.

The advantages that result from the application of the present invention are clear. The linear motor, that is the apparatus that generates the force, answers within times of the order of milliseconds to the commands ordered by the microcontroller through the power supply. The microcontroller, provided with an internal memory where the software for the operation of the machine and several programs are stored, constantly monitors the various dynamical sensors that measure for example the position, velocity and movement of the machine and the physiological sensors like for example the heart rate, body temperature, etc., and regulates the force depending on the training program (that can use all the information given by the physiological sensors) that the user has chosen through the interface, among the predefined programs or loaded from the external memory (for example from a USB support).

In particular the mechanism of the present invention has the following capabilities:

a) Capability to instantly regulate the force. The linear motor of the present invention is driven by a microcontroller that controls in a fast and precise way the current that flows inside the coils **3**, achieving an instantaneous capacity to regulate the force.

b) Instantaneous measure of the velocity. The microcontroller, through the sensors connected to it, is capable to instantly measure the velocity of execution of the exercise.

c) Ability to work isotonically. The apparatus and the methodology have the capacity to keep the force constant as the velocity changes and more in general can execute whatever desired force profile as the velocity changes.

d) Ability to work isokinetically. The apparatus and the methodology have the capacity to keep the velocity constant as the force changes and more in general can execute whatever desired velocity profile as the force changes.

e) Ability to work isotbnically/isokinetically. The apparatus and the methodology allow to choose whatever combination of isotonic/isokinetic work through its program.

f) Ability to work with concentric and eccentric movements. The present invention is able to work either when the muscle shortens (concentric movement) and lengthens (eccentric movement).

g) Ability to work isotonically with concentric movements/ isokinetically with eccentric movements. The apparatus and the methodology are able to control the cinematic and dynamic variables of the exercise such that they allow to work in a isotonic manner when the muscle shortens (concentric movement) and in an isokinetic manner when the muscle lengthens (eccentric movement).

The load device of the present invention therefore is able to substitute the standard ballasts used in the physical exercise machine of the known type. A considerable reduction of the weight and encumbrance of a machine equipped with the present invention in comparison with a machine equipped with a standard load of ballasts is possible. This further facilitates the adoption of the present invention in particular in the home fitness sector so as to permit the athlete to benefit from a machine provided with the indicated numerous functionalities and capable to improve in a sensible way the quality of their training.

The preferred embodiment of the present invention is to be considered with a pure illustrative scope. It is not to be considered exhaustive or as a limit of the invention in the precise form specified in it. Many variations and modification are possible in light of the present teaching. It is understood that the invention is not limited by the detailed discussion specified in it but from the following claims.

It is understood that the mechanism of the present invention can be utilized on every type of machine for physical exercise that actually use a load of weights.

**Claims**

1. Linear electric motor especially for a load device for an apparatus for physical exercise for muscle training, comprising:

- a plurality of permanent magnets (2), fixed to a pair of ferromagnetic cores (1), said plurality of permanent magnets being such that the adjacent magnets have opposite polarities and the opposite magnets are separated by a space and are facing each other with opposite poles;
- a plurality of coils (3) positioned in said separation space between the permanent magnets (2) and supplied by an electrical power supply, said coils being fixed to one another or to a structural support; said permanent magnets (2) and said ferromagnetic cores (1) being comprised in a movable part which slides with respect to said coils, said movable part being suitable to be coupled to a means (5) for connection to said apparatus for physical exercise, wherein said plurality of coils (3) comprises coils of the first (3') and a second (3") type, of flat and elongated toroidal shape, said first type of coil (3') presenting two raised short sides, and being assembled with said second type of coils (3") placing the two types of coils alternately side by side, so that the long sides of the coils of the first type (3') slot into the central slots of the coils of the second type (3"), wherein said plurality of coils (3) is arranged in two groups superimposed in two parallel planes, **characterized in that**
- said groups of coils are coupled relatively moved for a length equal to half the width of a side of the coils.

2. Electric motor as claimed in claim 1, wherein said plurality of coils (3) is arranged in two groups placed side by side on the same plane and with the means for connection (5) placed between the two groups.

3. Electric motor as claimed in claim 1, wherein said plurality of coils (3) is arranged in two groups superimposed in two parallel planes, wherein said two planes being interposed at least one further ferromagnetic nucleus (1') fixed to said mobile part.

4. Electric motor as claimed in claim 1, wherein a couple of permanent magnets (2) is fixed to semielliptical ferromagnetic cores(1) or flat (1').

5. Electric motor as claimed in claim 1, wherein when said permanent magnets (2) are located over said coils (3), in which a current flows in the direction given by the direction of the windings, they are subject to a force in a longitudinal direction, such that the assembly composed of ferromagnetic core (1) and permanent magnets (2) is capable of moving in said longitudinal direction over the coils, said coils being supplied in sequence during movement of the permanent magnets, the direction of the current therein changing so as to produce a force in the desired longitudinal direction, the extent of said force being controllable through the value of the current circulating in the coils.

6. Electric motor as claimed in claim 1, wherein the construction material of said ferromagnetic cores (1) comprises pure iron, or mild iron, or carbon steel, or silicon steel, or magnetic stainless steel, or mild ferrite, or nickel and iron alloys such as Permalloy, nickel, iron and cobalt alloys such as Kovar®.

7. Electric motor as claimed in claim 1, wherein the construction material of said permanent magnets (2) comprises rare earth, or ferrite or Alnico®.

8. Electric motor as claimed in claim 1, wherein the construction material of said coils (3) comprises aluminum or copper.

9. Electric motor as claimed in claim 1, wherein said structural support is composed of a material with high thermal conductivity.

10. Load device for an apparatus for physical exercise and apparatus for physical exercise utilized for muscle training, comprising a linear electric motor as claimed in any one of the preceding claims.

11. Load device as claimed in claim 10, also comprising:

   • an electrical power supply connected to the coils of the linear motor to supply said current thereto;
   • at least one micro controller electrically connected to the power supply;
   • a series of sensors, comprising dynamic and control sensors of the device, electrically connected to the controller;
   • a user interface electrically connected with the microcontroller.

12. Load device as claimed in claim 11, wherein said series of sensors comprise position, velocity, movement, temperature and physiological sensors that monitor the physical condition of the athlete such as heart beat and temperature sensors.

13. Load device as claimed in claim 11, wherein said power supply comprises devices to store the electrical energy produced and/or devices to feed electrical energy into the networks and/or devices for self-powering the apparatus.

**Patentansprüche**

1. Linearer Elektromotor speziell für die Belastungseinrichtung eines Gerätes zur körperlichen Museltrainingsübung,einschließlich:

- eine Vielzahl an Dauermagneten (2), an ein Paar ferromagnetischer Eisenkerne angebracht (1), besagte Vielzahl an Dauermagneten sind der Gestalt, dass die angrenzenden Magneten gegensätzlich gepolt sind und die sich gegenüberliegenden Magneten durch einigen Abstand voneinander getrennt und mit je gegensätzlichen Polen aufeinander ausgerichtet sind;

- eine Vielzahl an Spulen (3), in besagtem Abstand zwischen den Dauermagneten (2) platziert und durch eine elektrische Energieversorgung gespeist, besagte Spulen sind entweder aneinander oder an einem Hilfsmittel befestigt; besagte Dauermagneten (2) und besagte ferromagnetische Eisenkerne (1) sind von einem beweglichen Teil umfasst, welches in besagte Spulen gleiten kann, besagtes bewegliches Teil ist dazu geeignet, an ein Hilfsmittel (5) gekuppelt zu werden, um an besagtes Gerät zur Körperbetätigung angeschlossen zu werden, in welchem besagte Dauermagneten (3) Spulen des ersten Typus (3') und eines zweiten Typus (3") enthalten, von flacher und gestreckter Ringform, besagter erster Spulentypus (3') hat zwei erhabene kurze Seiten und wird mit besagtem zweiten Typus von Spulen (3") zusammengefügt, beide Spulentypen abwechselnd Seite an Seite platziert, so dass die lange Seite der Spulen des ersten Types (3') in die mittigen Aussparungen der Spulen des zweiten Types (3") eingesteckt sind, worin besagte Vielzahl an Spulen (3) in zwei Gruppen auf zwei parallelen Ebenen übereinanderliegen, **dadurch gekennzeichnet**

- besagte Gruppen an Spulen sind auf einer Länge die halb der Breite einer Seite der Spulen entspricht relativ beweglich miteinander befestigt.

2.  Elektromotor gemäß Anspruch 1, in welchem besagte Vielzahl an Spulen (3) in zwei Gruppen, Seite an Seite auf der gleichen Ebene und mit dem Verbindungshilfsmittel (5), das zwischen den zwei Gruppen platziert ist, angeordnet sind.

3.  Elektromotor gemäß Anspruch 1, in welchem besagte Vielzahl an Spulen (3) in zwei Gruppen angeordnet sind, die auf zwei parallelen Ebenen übereinanderliegen, wobei zumindest ein weiterer ferromagnetischer Kern (1') zwischen den zwei besagten Ebenen eingeschoben und an besagtem beweglichen Teil befestigt ist.

4.  Elektromotor gemäß Anspruch 1, in welchem ein Paar Dauermagneten (2) an halbelliptische (1) oder flache (1') ferromagnetische Spulen angebracht sind.

5.  Elektromotor gemäß Anspruch 1, in welchem, wenn gesagt wird, dass Dauermagneten(2) über besagten Spulen (3) platziert sind, in welchen ein Strom in die von den Gewinden vorgegebene Richtung fließt, diese Gegenstand einer Energie in Längsrichtung sind, so dass sich die Vorrichtung, bestehend aus dem ferromagnetischen Kern (1) und den Dauermagneten (2), in besagter Längsrichtung über die Spulen bewegen kann, besagte Spulen werden der Reihe nach während der Bewegung der Dauermagneten versorgt, die Richtung des Stroms darin wechselnd, so dass Energie in der gewollten Längsrichtung produziert wird, das Ausmaß besagter Energie ist durch die Stärke des Stroms, der in den Spulen zirkuliert, kontrollierbar.

6.  Elekrtischer Motor gemäß Anspruch 1, bei welchem der Baustoff besagter ferromagnetischer Kerne (1) reines Eisen, oder mildes Eisen, oder gekohlten Stahl, oder Siliziumstahl, oder magnetischen, nichtrostenden Stahl, oder mildes Eisenoxid, oder Nickel und Eisen Beimischungen wie Permalloy, Nickel, Eisen und Kobald Mischungen wie Kovar® enthält.

7.  Elektromotor gemäß Anspruch 1, bei welchem das Baumaterial besagter Dauermagneten(2) aus seltenen Erden, Eisenoxid oder Alnico ® besteht.

8.  Elektromotor gemäß Anspruch 1, in welchem das Baumaterial besagter Spulen (3) Aluminium oder Kupfer enthält.

9.  Elektromotor gemäß Anspruch 1, in welchem besagtes Hilfsmittel aus einem Material mit hoher thermischer Leitfähigkeit besteht.

10.  Belastungseinrichtung für ein Gerät zur Körperbetätigung und ein Gerät zur körperlichen Museltrainingsübung, einschließend einen linearen Elektromoter wie bei jeder der vorherigen Ansprüche angegeben.

11.  Belastungseinrichtung gemäß Anspruch 10, ferner einschließend:

    * eine elelrtische Energieversorgung, an die Spulen des linearen Motors angeschlossen, um besagten Energiestrom zu versorgen;
    * zumindest einen Mikroregler, elektrisch an die Stromversorgung angeschlossen;
    * eine Reihe von Sensoren, einschließend dynamische und Kontrollsensoren der Einrichtung, elektrisch mit dem Regler verbunden;
    * eine Bedienoberfläche, elektrisch mit dem Mikroregler verbunden.

12.  Belastungseinrichtung gemäß Anspruch 11, bei welchem besagte Reihe an Sensoren Position, Schnelligkeit, Bewegung und Temperatur erfassen und physiologische Sensoren, die den körperlichen Zustand des Athleten wie seinen Herzschlag messen und Temperatursensoren .

13. Belastungseinrichtung gemäß Anspruch 11, bei welchem die besagte Stromversorgung Instrumente beinhaltet, um die produzierte elektrische Energie einzuspeichern und/oder Instrumente, um die elektrische Energie in die Netzwerke einzuspeisen und/oder Instrumente, um das Gerät selbst anzutreiben.

**Revendications**

1. Moteur électrique linéaire conçu spécialement pour un dispositif de chargement d'appareil de musculation et d'exercice physique, comprenant:

   - un ensemble d'aimants permanents (2), fixé sur une paire de noyaux ferromagnétiques (1), ledit ensemble d'aimants permanents étant tel que les aimants adjacents ont des polarités opposées et que les aimants opposés sont séparés par un espace et se font face avec leurs pôles opposés ;
   - un ensemble de bobines (3) positionné dans ledit espace de séparation entre les aimants permanents (2) et alimenté par une alimentation électrique, lesdites bobines étant fixées les unes aux autres ou sur un support structural ; lesdits aimants permanents (2) et lesdits noyaux ferromagnétiques (1) étant compris dans une partie mobile qui glisse par rapport auxdites bobines, ladite partie mobile étant propre à être couplée à un moyen (5) de connexion audit appareil d'exercice physique, où ledit ensemble de bobines (3) comprend des bobines d'un premier (3') et d'un second type (3"), de forme plate, allongée et toroïdale, ledit premier type de bobines (3') présentant 2 petits côtés relevés, et étant assemblé avec ledit second type de bobines (3 ") plaçant les deux types de bobines côte-à-côte en alternance, afin que le côté le plus long de la bobine du premier type (3') s'intercale dans la fente centrale des bobines du second type (3"), où ledit ensemble de bobines (3) est organisé en deux groupes superposés dans deux plans parallèles, **caractérisés en ce que** - lesdits groupes de bobines sont couplés et se déplacent de façon relative sur une longueur égale à la moitié de la largeur d'un côté des bobines.

2. Le moteur électrique selon la revendication 1, **caractérisé en ce que** ledit ensemble de bobines (3) est organisé en deux groupes placés côte-à-côte sur le même plan et avec le moyen de connexion (5) placé entre les deux groupes.

3. Le moteur électrique selon la revendication 1, **caractérisé en ce que** ledit ensemble de bobines (3) est organisé en deux groupes superposés dans deux plans parallèles, dans lesquels lesdits deux plans étant espacés d'au moins un noyau ferromagnétique (1') sont fixés sur ladite partie mobile.

4. Le moteur électrique selon la revendication 1, **caractérisé en ce que** ledit couple d'aimants permanents (2) est fixé sur des noyaux ferromagnétiques semi-elliptiques (1) ou plat (1').

5. Le moteur électrique selon la revendication 1, **caractérisé en ce que**, quand lesdits aimants permanents (2) sont placés au-dessus desdites bobines (3), dans lesquelles un courant circule dans le sens de la direction des enroulements, ils sont sujets à une force dans la direction longitudinale, de telle sorte que l'assemblage composé du noyau ferromagnétique (1) et des aimants permanents (2) est capable de se déplacer dans ladite direction longitudinale au-dessus des bobines, lesdites bobines étant alimentées en séquence pendant le mouvement des aimants permanents, la direction du courant changeant en cela de manière à produire une force dans la direction longitudinale désirée, fétendue de ladite force étant contrôlable par la valeur du courant circulant dans les bobines.

6. Le moteur électrique selon la revendication 1, **caractérisé en ce que** le matériau desdits noyaux ferromagnétiques (1) se compose de fer pur, ou de fer doux, ou d'acier au carbone, ou d'acier au silicium, ou d'acier inoxydable magnétique, ou de ferrite douce, ou d'alliage de nickel et de fer comme le Permalloy, ou d'alliage de nickel, fer et cobalt comme le Kovar®.

7. Le moteur électrique selon la revendication 1, **caractérisé en ce que** le matériau desdits aimants permanents (2) se compose de terre rare, ou de ferrite, ou d'Alnico®.

8. Le moteur électrique selon la revendication 1, **caractérisé en ce que** le matériau desdites bobines (3) se compose d'aluminium ou de cuivre.

9. Le moteur électrique selon la revendication 1, **caractérisé en ce que** ledit support structural se compose de matériau de haute conductivité thermique.

10. Le dispositif de chargement pour un appareil d'exercice physique et un appareil d'exercice physique utilisé pour faire de la musculation, comprend un moteur électrique linéaire caractérisé selon l'une quelconque des revendications précédentes.

**11.** Le dispositif de chargement selon la revendication 10, **caractérisé en ce qu'**il comprend aussi :

> • une alimentation électrique connectée aux bobines du moteur linéaire pour fournir ledit courant à celles-ci ;
> • au moins un micro-contrôleur relié électriquement à une source d'alimentation ;
> • une série de capteurs, comprenant des capteurs dynamiques et de contrôle de l'appareil, reliée électriquement au contrôleur ;
> • une interface utilisateur reliée électriquement au micro-contrôleur.

**12.** Le dispositif de chargement selon la revendication 11, **caractérisé en ce que** lesdites séries de capteurs comprennent des capteurs de position, de vitesse, de mouvement, de température et des capteurs physiologiques qui surveillent la condition physique de l'athlète comme notamment les capteurs de fréquence cardiaque et de température.

**13.** Le dispositif de chargement selon la revendication 11, **caractérisé en ce que** ladite alimentation se compose de dispositifs pour stocker l'énergie électrique produite et/ou de dispositifs pour fournir l'énergie électrique aux réseaux et/ou de dispositifs pour alimenter l'appareil de façon autonome.

## FIG.1

## FIG. 2

FIG.4

FIG. 3

EP 2 516 023 B1

FIG. 5

## FIG. 6

## FIG. 7

## FIG. 8

FIG. 9

## FIG. 10

## FIG. 11

FIG. 12

# FIG. 13

# FIG. 14

C - C

**EP 2 516 023 B1**

**REFERENCES CITED IN THE DESCRIPTION**

**Patent documents cited in the description**

- US 6117049 A
- US 5785632 A
- US 5435798 A
- US 4063726 A
- DE 3920727

- DE 10351862
- EP 1166826 A
- DE 19517090
- US 6265793 B